# EUROPEAN PATENT APPLICATION

(11) **EP 4 596 657 A1**
(43) Date of publication of application: **06.08.2025**
(21) Application number: 23871406.7
(22) Date of filing: 24.07.2023
(51) Int. Cl.: C10G 7/00, C10G 3/00

(54) **SYSTEM FOR BIO-OIL UTILIZATION**

(30) Priority: 26.09.2022 JP 2022152511
(71) Applicant: Idemitsu Kosan Co.,Ltd., Tokyo 100-8321 (JP)
(72) Inventor: TOI Hiroyuki, Tokyo 100-8321 (JP); FUKUNAGA Tetsuya, Tokyo 100-8321 (JP)
(74) Representative: Gille Hrabal Partnerschaftsgesellschaft mbB Patentanwälte
(86) International application number: PCT/JP2023/027034
(87) International publication number: WO 2024/070163

(57) **Abstract**

Provided is a system for bio-oil utilization that can effectively exploit a bio-oil with ease without consideration of its properties and supply-demand balance while utilizing an existing oil refinery facility. The system for bio-oil utilization includes: an atmospheric distillation unit and a bio-oil-supplying mechanism; and at least one kind of unit selected from a gas-recovering unit, a hydrorefining unit, a naphtha-fractionating unit, a catalytic cracking unit, and a vacuum distillation unit. The bio-oil-supplying mechanism is configured to supply a bio-oil, which is derived from a biomass and is subjected to hydrodeoxygenation treatment, to the atmospheric distillation unit together with a stock oil containing crude oil.

## Description

### Technical Field

A technology of the present disclosure relates to a system for bio-oil utilization.

### Background Art

In recent years, the promotion of the utilization of renewable energy that replaces fossil fuel has started to be proposed. In addition to the utilization of natural energy (e.g., sunlight, wind power, or terrestrial heat) as the renewable energy, the utilization of each of biologically derived resources (so-called biomasses) including an animal and plant resource as the energy has been investigated, and the development of a technology directed toward the practical applications of these resources has been vigorously performed in recent years. The utilization of the biomass can suppress an increase in total amount of carbon dioxide due to the use of the fossil fuel, and is hence useful from the viewpoint of carbon neutrality.

For example, a technology including subjecting an animal and plant oil and fat to hydrogenation reforming to provide a light oil composition has been attracting attention. The following technology has been known as such technology (e.g., Patent Literature 1): a raw material containing the animal and plant oil and fat or the like, and a sulfur-containing hydrocarbon compound is brought into contact with a sulfide catalyst to provide a fraction; and a product obtained by hydrogenating the fraction with a metal catalyst carried on a carrier containing a crystalline molecular sieve is utilized as light oil. In addition, in, for example, Patent Literature 2, there is a disclosure of a method including: pretreating bio-grease through thermal cracking, vacuum distillation, catalytic cracking deoxygenation reaction, or hydrorefining; and then subjecting the pretreated product to atmospheric distillation to produce fuel oil (specifically, a gasoline fraction and a diesel (light oil) fraction).

### Citation List

### Patent Literature

PTL 1: JP 2009-161669 A
PTL 2: US 2021/355393 A1

### Summary of Invention

### Technical Problem

In each of the technologies described in Patent Literatures 1 and 2, the following attempt is made: a biomass, such as the animal and plant oil and fat, or the bio-grease, is refined, and a bio-oil obtained through the refining is utilized. Accordingly, there arises a need to arrange an independent refining facility for refining such biomass. That is, the technologies described in Patent Literatures 1 and 2 are each devoid of the following perspective: the facility is arranged together with an oil refinery facility, and the various units of the existing oil refinery facility are effectively exploited.

In addition, the bio-oil has a wide boiling point range, and hence when the bio-oil is merely distilled, the use of the distilled product as light oil, fuel oil, or the like has limitations from the viewpoint of product quality. Accordingly, it cannot be said that the distillation is sufficient in terms of effective exploitation of the bio-oil. Meanwhile, when an attempt is made to use the bio-oil as light oil, fuel oil, or the like without any limitation, not only facility cost but also cost for refining increases because there arises a need to perform various kinds of refining. From such viewpoint, the perspective of the effective exploitation of the various units of the existing oil refinery facility is important.

Incidentally, when a biomass-derived bio-oil is used as an alternative to a crude oil-derived component like the so-called biodiesel fuel oil of Patent Literature 1 or the like, the demand amount of the bio-oil may fluctuate depending on an increase or decrease in demand for fuel oil in various applications and a balance with various fractions to be used in combination with the bio-oil. Meanwhile, with regard to the bio-oil, biologically derived resources (biomasses) including an animal and plant resource, the resources each serving as a raw material for the bio-oil, may not be supplied in a constant amount, and hence a complicated operation of striking a supply-demand balance may be involved in maintaining a supply-demand balance for a constant supply of these biomasses. The same holds true for, for example, a case in which the bio-oil is utilized in applications except the biodiesel, for example, as part of a fuel oil composition for a ship, an aircraft, or the like.

In addition, in the case of the technology of Patent Literature 2, there is a need to strike a supply-demand balance as in the case of Patent Literature 1 because the technology includes: subjecting the bio-grease to predetermined pretreatment; then performing atmospheric distillation; and utilizing the resultant fraction as fuel oil (a gasoline fraction and a diesel fraction).

When a supply source and applications are determined as described above, there arises a need to strike a strict supply-demand balance, and an operation therefor is significantly complicated. In addition, when the supply-demand balance cannot be struck, the influence of the imbalance may spread to the entirety of an oil refinery. For example, when the biomass-derived bio-oil is oversupplied, a storage tank for the bio-oil is required. Meanwhile, when the demand amount of the bio-oil in an application becomes excessively large, there arises a need to adjust the amount of crude oil-derived fractions that should be replaced with the bio-oil.

In addition, the properties of the bio-oil may not be constant because the biologically derived resources (biomasses) including the animal and plant resource are each used as a raw material therefor. Accordingly, when an application of the bio-oil is determined, in the case where the bio-oil is used in combination with, for example, any other crude oil-derived fractions to secure properties required in the application, there may arise a need to make a review of an entire balance such as the securement of the required properties through the adjustment of the amount of the other crude oil-derived fractions. However, such review is not easy.

The technology of the present disclosure has been made in view of such actual circumstances, and an object thereof is to provide a system for bio-oil utilization that can effectively exploit a bio-oil with ease without consideration of its properties and supply-demand balance while utilizing an existing oil refinery facility.

### Solution to Problem

The technology of the present disclosure provides the following system for bio-oil utilization to solve the above-mentioned problems.
1. A system for bio-oil utilization, comprising: an atmospheric distillation unit and a bio-oil-supplying mechanism; and at least one kind of unit selected from a gas-recovering unit, a hydrorefining unit, a naphtha-fractionating unit, a fluid catalytic cracking unit, and a vacuum distillation unit, wherein the bio-oil-supplying mechanism is configured to supply a bio-oil, which is derived from a biomass and is subjected to hydrodeoxygenation treatment, to the atmospheric distillation unit together with a stock oil containing crude oil.
2. The system for bio-oil utilization according to the above-mentioned item 1, wherein the stock oil further contains at least one kind selected from a waste plastic cracked oil, and an animal and plant oil and fat.
3. The system for bio-oil utilization according to the above-mentioned item 1 or 2, further comprising a dehydration treatment unit for the bio-oil.
4. The system for bio-oil utilization according to any one of the above-mentioned items 1 to 3, wherein the bio-oil subjected to the hydrodeoxygenation treatment has an oxygen content of 10 mass% or less, a chlorine content of 10 mass ppm or less, and an acid value of 10 mgKOH/g or less.
5. The system for bio-oil utilization according to any one of the above-mentioned items 1 to 4, wherein the biomass is at least one kind selected from an herbaceous biomass, a lignocellulosic biomass, a microorganism-derived biomass, an algal biomass, and an organic waste-based biomass.
6. The system for bio-oil utilization according to any one of the above-mentioned items 1 to 5, wherein the biomass is a non-edible biomass.

### Advantageous Effects of Invention

The technology of the present disclosure can provide the system for bio-oil utilization that can effectively exploit a bio-oil with ease without consideration of its properties and supply-demand balance while utilizing an existing oil refinery facility.

### Brief Description of Drawings

[Fig. 1] Fig. 1 is a flowchart for illustrating a preferred mode of a system for bio-oil utilization of this embodiment.
[Fig. 2] Fig. 2 is a flowchart for illustrating preferred modes of a bio-oil-supplying mechanism in the system for bio-oil utilization of this embodiment.
[Fig. 3] Fig. 3 is a flowchart for illustrating a preferred mode of a hydrodeoxygenation treatment facility to be used in the system for bio-oil utilization of this embodiment, the facility performing the hydrodeoxygenation treatment of a bio-oil.

### Description of Embodiments

An embodiment of the technology of the present disclosure (hereinafter sometimes referred to as "this embodiment") is described below. In this description, the numerical values of an upper limit and a lower limit related to numerical ranges represented by the terms "or more," "or less," and "from ··· to ···" are numerical values that may be freely combined, and the numerical values of Examples may be used as the numerical values of the upper limit and the lower limit.

### [System for Bio-oil Utilization]

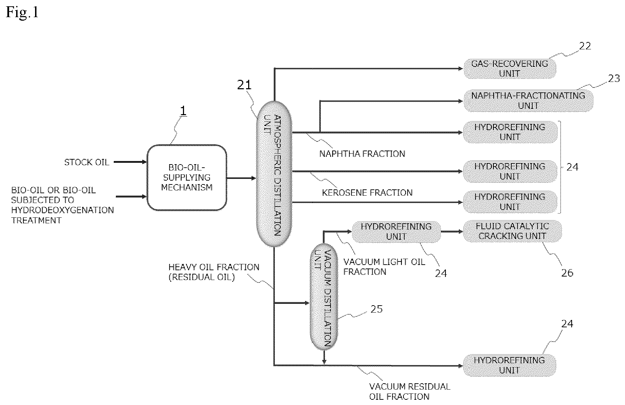

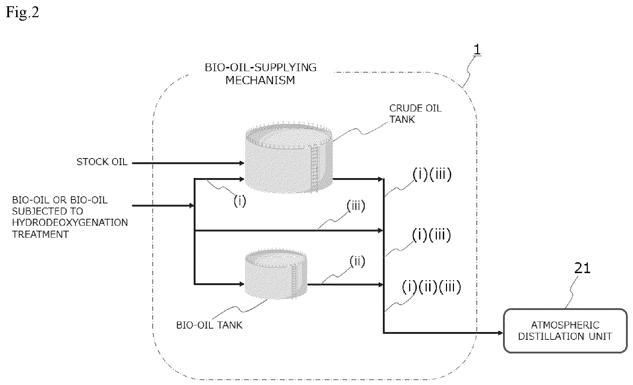

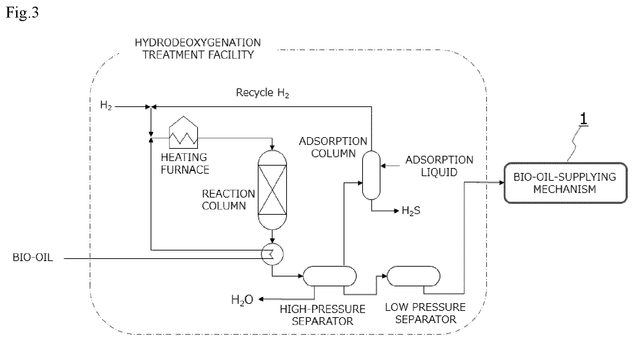

The outline of a system for bio-oil utilization of this embodiment is described with reference to Fig. 1 to Fig. 3. Fig. 1 is a flowchart for illustrating a preferred mode of the system for bio-oil utilization of this embodiment, Fig. 2 is a flowchart for illustrating preferred modes of a bio-oil-supplying mechanism, and Fig. 3 is a flowchart for illustrating a preferred mode of a facility that performs the hydrodeoxygenation treatment of a bio-oil.

The system for bio-oil utilization illustrated in Fig. 1 includes an atmospheric distillation unit 21 and a bio-oil-supplying mechanism 1, and a system that supplies a bio-oil to the atmospheric distillation unit 21 together with a stock oil is illustrated.

The bio-oil to be supplied to the atmospheric distillation unit 21 is subjected to hydrodeoxygenation treatment. The bio-oil only needs to be subjected to the hydrodeoxygenation treatment at the time of its supply to the atmospheric distillation unit 21, and hence may be subjected to the hydrodeoxygenation treatment before its supply to the bio-oil-suppling mechanism 1, or may be subjected to the hydrodeoxygenation treatment between the bio-oil-supplying mechanism 1 and the atmospheric distillation unit 21. That is, as illustrated in each of Fig. 1 and Fig. 2, the bio-oil (bio-oil that is not subjected to the hydrodeoxygenation treatment) or the bio-oil subjected to the hydrodeoxygenation treatment is supplied to the bio-oil-supplying mechanism 1.

In addition, in the system for bio-oil utilization illustrated in Fig. 1, the following is illustrated: the stock oil and the bio-oil subjected to the hydrodeoxygenation treatment are supplied to the atmospheric distillation unit 21, and are then fractionated into various fractions including naphtha, kerosene, and diesel; and these fractions are further treated in refining facilities, such as a gas-recovering unit 22, a naphtha-fractionating unit 23, and a hydrorefining unit 24. In addition, the following is illustrated: a heavy oil fraction distilled out of a column bottom is further distilled in a vacuum distillation unit 25, is supplied to the hydrorefining unit 24 and to a fluid catalytic cracking unit 26 or the like, and is desulfurized by direct desulfurization or indirect desulfurization.

The respective units included in an existing oil refinery facility may be utilized as the atmospheric distillation unit included in the system for bio-oil utilization of this embodiment, and the gas-recovering unit, the hydrorefining unit, the naphtha-fractionating unit, the fluid catalytic cracking unit, and the vacuum distillation unit included in the system to which the various fractions distilled out by the atmospheric distillation unit are supplied. Effective exploitation of the respective units of the existing oil refinery facility can reduce not only facility cost but also cost for refining.

In addition, the supply of the bio-oil subjected to the hydrodeoxygenation treatment to the atmospheric distillation unit results in the fractionation of the bio-oil subjected to the hydrodeoxygenation treatment into the various fractions in the atmospheric distillation unit. That is, the various fractions distilled out by the atmospheric distillation of the bio-oil subjected to the hydrodeoxygenation treatment are distributed to various fractions distilled out by the atmospheric distillation of stock oils corresponding to the various fractions, and the various fractions are used in accordance with applications. Accordingly, when the bio-oil is received, the bio-oil can be effectively exploited in a proper amount without consideration of a supply-demand balance due to the determination of a supply source and applications. **In** addition, there is no need to consider the properties of the bio-oil because the various fractions in the bio-oil subjected to the hydrodeoxygenation treatment are merely distributed to the various fractions distilled out by the atmospheric distillation of the stock oils corresponding to the various fractions.

Thus, the system for bio-oil utilization of this embodiment becomes a system that can effectively exploit a bio-oil with ease without consideration of its properties and supply-demand balance while utilizing an existing oil refinery facility.

### (Bio-oil)

The bio-oil to be used in the system for bio-oil utilization of this embodiment is subjected to the hydrodeoxygenation treatment. **In** addition, the bio-oil is a liquid component produced from a non-fossil resource, is derived mainly from a biomass, and is preferably classified into the following two compounds:
(i) an oxygen-containing compound that is a liquid at normal temperature or in a slightly heated state such as a plant oil (e.g., palm oil or soybean oil), a waste cooking oil, tallow, an oil and fat extracted from algae, or cashew nut shell liquid (CNSL); and
(ii) an oxygen-containing compound that is brought into a liquid state at normal temperature by subjecting a solid biomass (e.g., herbaceous plant, wood, an agricultural residue, a fermentation residue, or an algal body) to treatment, such as pyrolysis or solvent thermal liquefaction.

The term "pyrolysis" as used herein means that the solid biomass is liquefied by being decomposed through heating (at, for example, from 290°C to 600°C). **In** addition, the term "solvent thermal liquefaction" means that the solid biomass is liquefied by being decomposed through heating (at, for example, from 250°C to 450°C) together with a solvent.

The solid biomass may be dried, or may be pulverized. An appropriate heat medium may be used in the pyrolysis. An electromagnetic wave such as a microwave may be used in the pyrolysis . A catalyst may be added in the pyrolysis to promote the cracking, or a slight amount of hydrogen may be added. An organic solvent may be used as the solvent of the solvent thermal liquefaction, water may be used, or an ionic liquid or the like may be used. The solvent thermal liquefaction may be performed under a subcritical condition, or may be performed under a supercritical condition. A catalyst may be added in the solvent thermal liquefaction to promote the cracking, or a slight amount of hydrogen may be added.

The biomass serving as a raw material for the bio-oil means a resource that is an organic substance derived from animal and plant except fossil fuel, and typical preferred examples thereof include an herbaceous biomass, a lignocellulosic biomass, a microorganism-derived biomass, an algal biomass, and an organic waste-based biomass. In the system of this embodiment, a bio-oil derived from a single biomass among those biomasses may be used, or a bio-oil derived from a combination of a plurality of kinds of the biomasses may be used.

Typical preferred examples of the herbaceous biomass include a trunk and empty fruit bunch of a palm tree, a fiber and seed of a palm fruit, a bagasse (bagasse of sugar cane and high-biomass-amount sugar cane), cane top (a top and leaf of sugar cane), energy cane, rice straw, wheat straw, a stem and leaf, and residue of corn (corn stover, corn cob, or corn hull), a peel and husk of j atropha species, cashew husk, switchgrass, erianthus, a high-biomass-yield crop, an energy crop, and an energy cane.

Typical preferred examples of the lignocellulosic biomass include conifers and broad-leaf trees, such as cedar, Japanese cypress, Aomori cypress, Japanese cherry, eucalyptus, Japanese beech, and bamboo.

Preferred typical examples of the microorganism-derived biomass include: the mixed sludge of a sewage-treatment plant; the wastewater treated sludge of a food processing plant or the like; the beer yeast lees of a brewery; and shochu lees.

Typical preferred examples of the algal biomass include microalgae such as algae classified into green algae, yellow flagellum algae, diatom, dinoflagellate, single-celled eucaryotic algae, freshwater single-celled green algae (chlorella), and cyanobacteria.

In addition, preferred typical examples of the organic waste-based biomass include: food-based biomasses, such as food waste (kitchen waste), and an animal and plant residue (food processing residue); and paper-based biomasses, such as paper trash and wastepaper.

Such products as described below may each be used as the oil and fat: a fatty oil that is a liquid at normal temperature and a solid fat that is turned into a liquid by being warmed at about 100°C or less, such as a plant oil and fat like an ester of a fatty acid and glycerin, which is obtained by extracting a lipid in a plant, such as an oil palm, a soybean, a rapeseed, corn, or rice, and refining the lipid, and an animal oil and fat such as tallow like lard. In addition, a hydrogenated oil and fat reduced in unsaturated fatty acid content through hydrogenation treatment may be used as the oil and fat.

Although the biomass serving as a raw material for the bio-oil may be any one of an edible biomass and a non-edible biomass, a non-edible biomass (e.g., a trunk, a seed, or a stem or a leaf) among the herbaceous biomasses, and a non-edible biomass typified by the lignocellulosic biomass are each preferably used. This is because such biomass cannot be utilized as food, and hence can be effectively exploited.

### (Hydrodeoxygenation Treatment)

The bio-oil to be used in the system of this embodiment is subjected to the hydrodeoxygenation treatment. The bio-oil is derived from the above-mentioned biomass, and hence has, as a general property, the following property: its oxygen content is higher than that of the stock oil such as crude oil. When the bio-oil is used while its oxygen content is kept high, that is, when the bio-oil subjected to the hydrodeoxygenation treatment is not used, in, for example, the case where an existing atmospheric distillation unit to be used in the atmospheric distillation of the crude oil is used, the bio-oil is responsible for the corrosion and contamination of the atmospheric distillation unit and various units downstream thereof. Accordingly, the bio-oil subjected to the hydrodeoxygenation treatment is used in the system of this embodiment.

Any treatment may be adopted as the hydrodeoxygenation treatment without any particular limitation as long as oxygen in the bio-oil can be removed by the treatment. A preferred typical example of a unit for performing the hydrodeoxygenation treatment is a facility illustrated in Fig. 3 that performs the hydrodeoxygenation treatment of the bio-oil.

The hydrodeoxygenation treatment facility illustrated in Fig. 3 includes: a heating furnace that heats the bio-oil and hydrogen to be used for hydrodeoxygenation; and a reaction column that subjects a fluid containing the bio-oil and hydrogen heated by the heating furnace to a hydrodeoxygenation reaction. The bio-oil after the hydrodeoxygenation reaction in the reaction column contains moisture produced as a by-product by the reaction. The bio-oil subjected to the hydrodeoxygenation treatment, the bio-oil containing the moisture, is used in the heating of the bio-oil to be supplied to the reaction column in a feed/effluent heat exchanger, and is then separated into a hydrogen-rich gas, the moisture, and the bio-oil subjected to the hydrodeoxygenation treatment in a high-pressure separator. The bio-oil subjected to the hydrodeoxygenation treatment thus separated is supplied to the bio-oil-supplying mechanism after a gas incorporated thereinto has been volatilized in a low-pressure separator.

**In** addition, the hydrogen-rich gas is used as recycled hydrogen in the hydrodeoxygenation reaction after hydrogen sulfide has been removed therefrom in an adsorption column.

The reaction column to be used in the hydrodeoxygenation reaction of the bio-oil is filled with a catalyst having at least one kind of active metallic species selected from active metallic species, for example, nickel, cobalt, molybdenum, tungsten, and sulfur, such as NiMo, CoMo, NiCoMo, NiMoW, NiMoS, or CoMoS, carried on a carrier, such as alumina or silica, and the hydrodeoxygenation reaction proceeds by such catalyst.

Various conditions for the reaction in the reaction column are as described below. A reaction temperature is typically 300°C or more, preferably 320°C or more, more preferably 340°C or more, and its upper limit is typically 400°C or less, preferably 380°C or less, more preferably 360°C or less. That is, the temperature of the fluid containing the bio-oil and hydrogen is increased to the above-mentioned temperature in the heating furnace.

A hydrogen supply amount is preferably 100 or more, more preferably 500 or more, still more preferably 800 or more, even still more preferably 1,250 or more in terms of ratio (Nm³/kL) between hydrogen and the bio-oil, and its upper limit is preferably 2,000 or less, more preferably 1,750 or less.

In addition, a hydrogen partial pressure is typically 4.0 MPa or more, preferably 5.0 MPa or more, more preferably 6.0 MPa or more, still more preferably 7.5 MPa or more, and its upper limit is typically 9.0 MPa or less, preferably 8.5 MPa or less.

The site at which the hydrodeoxygenation treatment facility that performs the hydrodeoxygenation treatment is arranged is not particularly limited as long as the hydrodeoxygenation treatment is performed by the time when the bio-oil is supplied to the atmospheric distillation unit. For example, as illustrated in Fig. 3, the facility may be arranged upstream of the bio-oil-supplying mechanism 1 to be described later, that is, before the bio-oil is supplied to the bio-oil-supplying mechanism 1, or the facility may be arranged in the bio-oil-supplying mechanism 1 as described later.

### (Dehydration Treatment Unit)

In addition, the bio-oil has, as a general property, the following property: its moisture content is higher than that of the stock oil such as crude oil. In addition, the chlorine concentration of the bio-oil may be high depending on the kind of the biomass serving as a raw material for the bio-oil. Accordingly, as in the crude oil to be described later, the bio-oil may be responsible for clogging or the like due to the corrosion and contamination of the atmospheric distillation unit and the various units downstream thereof. In consideration of a reduction in clogging due to the corrosion and the contamination, the bio-oil to be used in the system of this embodiment is preferably used after having been subjected to dehydration treatment. That is, the system of this embodiment preferably includes a dehydration treatment unit for the bio-oil.

Any method may be adopted as a method of subjecting the bio-oil to the dehydration treatment without any particular limitation as long as its moisture can be removed by the method. In addition, in consideration of the fact that the bio-oil contains salt as in crude oil and the salt should be removed, desalting treatment to be typically performed for the crude oil is preferably adopted. Even when the salt concentration of the bio-oil is low, the desalting treatment can remove the moisture thereof. Accordingly, the desalting treatment is preferably performed irrespective of whether the salt concentration is large or small. A method for the desalting treatment is described later in the desalting treatment of the crude oil. In addition, the bio-oil typically contains an inorganic salt and an organochlorine compound, and the dehydration treatment (desalting treatment) removes mainly an inorganic chlorine compound together with the moisture. The dehydration treatment is preferably performed on the bio-oil before the performance of the hydrodeoxygenation treatment.

With regard to the usage amount of the bio-oil, the reception amount of the bio-oil only needs to be adopted as it is as the usage amount, and is hence not particularly limited. However, in consideration of, for example, effective exploitation of the bio-oil and stable operation of the system of this embodiment, the usage amount is preferably 0.1 part by mass or more with respect to 100 parts by mass of the supply amount of the stock oil, and its upper limit is preferably 30 parts by mass or less, more preferably 25 parts by mass or less.

### (Various Properties of Bio-oil)

The typical properties of the bio-oil subjected to the hydrodeoxygenation treatment to be used in the system of this embodiment are described.

The oxygen content of the bio-oil subjected to the hydrodeoxygenation treatment to be used in the system of this embodiment preferably becomes an oxygen content comparable to that of crude oil, and is typically 10 mass% or less, preferably 5 mass% or less, more preferably 1 mass% or less. With regard to the lower limit of the content, the content is preferably as small as possible, and it is particularly preferred that the content be 0 mass%, that is, the bio-oil be completely free of oxygen.

A chlorine content is typically 10 mass ppm or less, preferably 8 mass ppm or less, more preferably 5 mass ppm or less. With regard to the lower limit of the content, the content is preferably as small as possible, and it is particularly preferred that the content be 0 mass%, that is, the bio-oil be completely free of chlorine.

In addition, an acid value is typically 10 mgKOH/g or less, preferably 8 mgKOH/g or less, more preferably 5 mgKOH/g or less. With regard to the lower limit of the value, the value is preferably as small as possible, and is typically about 0.1 mgKOH/g.

### (Stock Oil)

The stock oil to be used together with the bio-oil in the system for bio-oil utilization of this embodiment contains crude oil.

The crude oil is not particularly limited as long as the crude oil is received in the oil refinery facility, and examples thereof include an untreated oil derived from oil well (petroleum-based crude oil, such as Arabian Heavy, Arabian Medium, Arabian Light, Arabian Extra Light, Kuwait, Oman, Qatar Land, or Qatar Marine), coal liquefaction oil, tar sand oil, oil sand oil, oil shale oil, and Orinoco tar, synthetic crude oils obtained from these oils, and mixed oils obtained by mixing a plurality of kinds thereof.

A product obtained by pretreating the above-mentioned crude oil as required is preferably used as crude oil to be supplied to the atmospheric distillation unit.

The crude oil typically contains, for example, bottom sludge and water, and seawater, and hence contains, as an impurity, a chloride, carbonate, sulfate, or the like of sodium or magnesium. The impurity is responsible for clogging or the like due to the corrosion and contamination of the atmospheric distillation unit and the various units downstream thereof. Accordingly, the following treatment is preferably performed as the pretreatment: moisture, salt, and mud in the crude oil are removed by desalting treatment.

The desalting treatment only needs to be performed by a conventionally known method, and such methods as described below each only need to be adopted: an electric desalting method including adding water to the crude oil, stirring the mixture to dissolve salt, which is incorporated into the crude oil, in the water, and applying a voltage in a desalting tank to break and separate an aqueous emulsion containing the salt; and a chemical desalting method including breaking and separating the emulsion with an emulsion breaker.

The pretreatment of the crude oil only needs to be performed on the crude oil received once in a crude oil tank. Then, the pretreated crude oil is preferably supplied to the bio-oil-supplying mechanism in the system of this embodiment.

The stock oil may contain any other oil in addition to the above-mentioned crude oil. A preferred example of the other oil is a waste plastic cracked oil.

The waste plastic cracked oil is obtained by condensing an oil gas obtained by thermally cracking waste plastic. Preferred typical examples of the waste plastic include various materials for forming, for example, a bottle for drinking and eating, a shopping bag, a food tray, a packaging film, the interior and exterior parts of a house building material, the interior parts of an automobile or the like, and the exterior member of an electric appliance.

Those waste plastic cracked oils may be used alone or in combination thereof.

The content of the crude oil in the stock oil is preferably 50 mass% or more, more preferably 80 mass% or more, still more preferably 90 mass% or more, still further more preferably 95 mass% or more with respect to the total amount of the stock oil. It is particularly preferred that the content be 100 mass%, that is, the stock oil be formed only of the crude oil.

### (Atmospheric Distillation Unit)

The atmospheric distillation unit of the system for bio-oil utilization of this embodiment may be a unit dedicated for the system of this embodiment, or the atmospheric distillation unit of an oil refinery facility may be used as the unit. In consideration of the fact that the stock oil contains the crude oil, and the fact that various fractions distilled out by the atmospheric distillation of the bio-oil subjected to the hydrodeoxygenation treatment are distributed to various fractions distilled out by the atmospheric distillation of stock oils corresponding to the various fractions, and the various fractions are used in accordance with applications, the atmospheric distillation unit of the oil refinery facility, the unit being used in the atmospheric distillation of the crude oil, is preferably used as the atmospheric distillation unit of the system of this embodiment. Thus, effective utilization of an existing oil refinery facility can be achieved.

Accordingly, the system for bio-oil utilization of this embodiment is preferably incorporated into an oil refinery facility using crude oil, though the system may be present alone. In addition, there is no need to newly arrange an atmospheric distillation unit for the system for bio-oil utilization of this embodiment.

The atmospheric distillation unit is a unit that fractionates the stock oil containing the crude oil and the bio-oil subjected to the hydrodeoxygenation treatment into various fractions, such as a gas fraction, a naphtha fraction, a kerosene fraction, a light oil fraction, and a heavy oil fraction, from a column top portion. The general applications and the like of those various fractions are described below.

The gas fraction is typically separated into a light gas and a LPG. The light gas is used as a fuel gas after an acidic gas (sulfur-containing gas) has been removed therefrom by amine refining treatment or the like as required, and the LPG is used as a LP gas after an impurity has been removed therefrom as required.

The naphtha fraction is distilled out as a light naphtha fraction and a heavy naphtha fraction, or is collectively distilled out as a naphtha fraction. The light naphtha fraction is used as gasoline or as a raw material to be used in an ethylene-cracking unit, and is used after having been converted into, for example, acetylene, propylene, butane, or butene as well as ethylene. The heavy naphtha fraction is subjected to, for example, desulfurization and denitrification treatment by hydrorefining treatment, and is then subjected to catalytic reforming treatment to be used as high-octane gasoline or as a raw material to be used in an aromatic hydrocarbon-producing unit. The heavy naphtha fraction is used after having been converted into an aromatic hydrocarbon, such as benzene, xylene, or toluene.

In addition, in the case of the collective fractionation as the naphtha fraction, the naphtha fraction is subjected to, for example, desulfurization and denitrification treatment by hydrorefining treatment to be fractionated into a light naphtha fraction and a heavy naphtha fraction, and these fractions are used in various applications after the above-mentioned various kinds of treatment.

The kerosene fraction is subjected to, for example, desulfurization and denitrification treatment by hydrorefining treatment to be used as, for example, kerosene or a base oil for a jet fuel oil or the like.

The light oil fraction is subjected to, for example, desulfurization and denitrification treatment by hydrorefining treatment to be used as diesel light oil. **In** addition, a light oil fraction that is heavy (heavy light oil fraction) out of the light oil fraction is subjected to a catalytic cracking reaction in a fluid catalytic cracking unit (FCC unit) to be converted into light oil. Thus, a fuel gas, cracked gasoline, and a cracked light oil fraction are obtained. The cracked gasoline is used as gasoline by being compounded with the naphtha fraction or the like, and the cracked light oil fraction is used as various kinds of heavy oil such as heavy oil A by being compounded with the heavy oil fraction.

In addition to the heavy light oil fraction, a desulfurized light oil fraction obtained by subjecting a heavy fraction to hydrorefining treatment (hydrogenation desulfurization and denitrification treatment) may also be supplied to the fluid catalytic cracking unit (FCC unit).

The heavy oil fraction is distilled under reduced pressure in the vacuum distillation unit to turn into a vacuum light oil fraction. The desulfurized light oil fraction obtained by subjecting the vacuum light oil fraction to, for example, desulfurization and denitrification treatment by hydrorefining treatment is used as it is as various raw materials such as A-fuel oil (Bunker A), or is used after having been supplied to the fluid catalytic cracking unit (FCC unit) and converted into light oil. In addition, a vacuum residual oil fraction obtained from the column bottom of the vacuum distillation units subjected to, for example, desulfurization and denitrification treatment by hydrorefining treatment to turn into a desulfurized heavy oil fraction, and the desulfurized heavy oil fraction is used as various raw materials such as heavy oil A, or as asphalt.

### (Other Units)

The system for bio-oil utilization of this embodiment includes the atmospheric distillation unit and the bio-oil-supplying mechanism, and includes, as any other unit except such unit and mechanism, at least one kind of unit selected from the gas-recovering unit, the hydrorefining unit, the naphtha-fractionating unit, the fluid catalytic cracking unit, and the vacuum distillation unit. Those units are units for treating various fractions obtained through fractionation in the atmospheric distillation unit, and are specifically units for performing treatment such as refining.

Examples of the units that performs the treatment, which may be performed on the various fractions obtained by the above-mentioned atmospheric distillation unit, include the units illustrated in Fig. 1, that is, the gas-recovering unit 22, the naphtha-fractionating unit 23, the hydrorefining unit 24, the vacuum distillation unit 25, and the fluid catalytic cracking unit 26. The gas-recovering unit 22 is a unit that recovers a gas fraction, the naphtha-fractionating unit 23 is a unit that fractionates a naphtha fraction into light naphtha and heavy naphtha, the hydrorefining unit 24 is a unit that subjects the naphtha fraction, a kerosene fraction, a light oil fraction, and a heavy oil fraction to desulfurization and denitrification treatment by hydrorefining, the vacuum distillation unit 25 is a unit that distills a heavy fraction under reduced pressure to fractionate a vacuum light oil fraction, and the fluid catalytic cracking unit (FCC unit) 26 is a unit that subjects a heavy light oil fraction or a desulfurized heavy oil fraction, which is obtained by subjecting the vacuum light oil fraction to hydrorefining treatment, to a catalytic cracking reaction.

The system for bio-oil utilization of this embodiment only needs to include one kind of unit selected from those other unit, and may include two or more kinds of the units. In addition, from the viewpoint of effectively utilizing an existing oil refinery facility, those other units are preferably units included in the existing oil refinery facility. Accordingly, when the units of the existing oil refinery facility are used, it can be said that the above-mentioned other units of the system for bio-oil utilization of this embodiment may vary depending on what kind of unit the existing oil refinery facility includes.

### (Bio-oil-supplying Mechanism)

The system for bio-oil utilization of this embodiment includes the bio-oil-supplying mechanism. The bio-oil-supplying mechanism is used for receiving the bio-oil or the bio-oil subjected to hydrodeoxygenation, and the stock oil, and supplying the oils to the atmospheric distillation unit.

The bio-oil-supplying mechanism is described with reference to Fig. 2. Fig. 2 is a flowchart for illustrating preferred modes of the bio-oil-supplying mechanism 1 in the system for bio-oil utilization of this embodiment. Preferred typical examples of the mode of the bio-oil-supplying mechanism 1 include the following modes (i) to (iv). The symbols (i) to (iii) in Fig. 2 correspond to the following modes (i) to (iii).
(i) The bio-oil is received in a crude oil tank, the stock oil and the bio-oil are mixed in the crude oil tank, and the stock oil and the bio-oil are supplied to the atmospheric distillation unit 21.
(ii) The bio-oil is received in a bio-oil tank, a pipe for the bio-oil and a pipe for the stock oil received in the crude oil tank are connected to each other, and the stock oil and the bio-oil are supplied to the atmospheric distillation unit21.
(iii) The pipe for the bio-oil and the pipe for the stock oil received in the crude oil tank are connected to each other, and the stock oil and the bio-oil are supplied to the atmospheric distillation unit 21.
(iv) The bio-oil is received in a slop tank (reprocessed oil tank) in an oil refinery facility, a supply pipe from the slop tank and the pipe for the stock oil are connected to each other, and the stock oil and the bio-oil, and in some cases, any other reprocessed oil are supplied to the atmospheric distillation unit 21.

**In** the system of this embodiment, the bio-oil only needs to be subjected to the hydrodeoxygenation treatment at the time of its supply to the atmospheric distillation unit, and hence the bio-oil to be received in the bio-oil-supplying mechanism may be subjected to the hydrodeoxygenation treatment, or may not be subjected to the hydrodeoxygenation treatment.

When the bio-oil that is not subjected to the hydrodeoxygenation treatment is received, in the case of the above-mentioned mode (i), a facility for performing the hydrodeoxygenation treatment is desirably arranged before the supply of the bio-oil to the crude oil tank.

**In** the case of the above-mentioned (ii), the facility for performing the hydrodeoxygenation treatment only needs to be arranged before the supply of the bio-oil to the bio-oil tank or before the connection of a pipe from the bio-oil tank to the pipe for the stock tank. In addition, in the case of the above-mentioned (iii), the facility for performing the hydrodeoxygenation treatment only needs to be arranged at least before the connection to the pipe for the stock tank.

The bio-oil-supplying mechanism only needs to include at least one of the above-mentioned modes (i) to (iv), and may include a plurality of modes as follows: the system simultaneously includes the above-mentioned modes (i) to (iii) as illustrated in Fig. 2. From the viewpoint of a reduction in initial facility cost, one of the above-mentioned modes (i) to (iv) only needs to be adopted, and from the viewpoint of corresponding to the diversity of the operation of the system, it is desired that two or more of the above-mentioned modes (i) to (iv) be simultaneously adopted.

When two or more of the modes are simultaneously adopted, in consideration of both the initial facility cost and the diversity of the operation, the following combination is preferred: the above-mentioned modes (i) and (ii); the above-mentioned modes (i) and (iii); or the above-mentioned modes (ii) and (iii).

As described above, in consideration of the feature in that the bio-oil subjected to the hydrodeoxygenation treatment is supplied to the atmospheric distillation unit together with the stock oil containing the crude oil, an atmospheric distillation unit existing in an oil refinery facility is preferably utilized in the system for bio-oil utilization of this embodiment. That is, the system of this embodiment is preferably incorporated into an oil refinery facility using crude oil. Thus, effective utilization of the existing oil refinery facility can be achieved. In addition, the same holds true for the gas-recovering unit, the hydrorefining unit, the naphtha-fractionating unit, the fluid catalytic cracking unit, and the vacuum distillation unit described above.

For the same reason as that described above, an existing tank and an existing pipe are preferably used as the crude oil tank and the pipe from the crude oil tank to the atmospheric distillation unit in the bio-oil-supplying mechanism of the system of this embodiment as long as the tank and the pipe have already been present in the oil refinery facility.

As long as a bio-oil tank has already been present in the oil refinery facility, the existing tank may be used for the bio-oil, and when no tank is present, such tank only needs to be newly arranged. The same holds true for the pipe for the bio-oil.

In addition, when the stock oil and the bio-oil need to be force-fed, a pump may be arranged as required, and when flow rate management is performed, instruments, such as a flowmeter and a flow control valve, may be arranged.

### Industrial Applicability

The system for bio-oil utilization of this embodiment can effectively exploit a bio-oil with ease without consideration of its properties and supply-demand balance. Accordingly, the system is suitably utilized by being additionally installed in an existing oil refinery facility.

## Claims

1. A system for bio-oil utilization, comprising:
an atmospheric distillation unit and a bio-oil-supplying mechanism; and
at least one kind of unit selected from a gas-recovering unit, a hydrorefining unit, a naphtha-fractionating unit, a fluid catalytic cracking unit, and a vacuum distillation unit,
wherein the bio-oil-supplying mechanism is configured to supply a bio-oil, which is derived from a biomass and is subjected to hydrodeoxygenation treatment, to the atmospheric distillation unit together with a stock oil containing crude oil.

2. The system for bio-oil utilization according to claim 1, wherein the stock oil further contains at least one kind selected from a waste plastic cracked oil, and an oil and fat.

3. The system for bio-oil utilization according to claim 1 or 2, further comprising a dehydration treatment unit for the bio-oil.

4. The system for bio-oil utilization according to any one of claims 1 to 3, wherein the bio-oil subjected to the hydrodeoxygenation treatment has an oxygen content of 10 mass% or less, a chlorine content of 10 mass ppm or less, and an acid value of 10 mgKOH/g or less.

5. The system for bio-oil utilization according to any one of claims 1 to 4, wherein the biomass is at least one kind selected from an herbaceous biomass, a lignocellulosic biomass, a microorganism-derived biomass, an algal biomass, and an organic waste-based biomass.

6. The system for bio-oil utilization according to any one of claims 1 to 5, wherein the biomass is a non-edible biomass.
